# EUROPEAN PATENT APPLICATION

(11) **EP 1 052 450 A1**
(43) Date of publication of application: **15.11.2000**
(21) Application number: 00109117.2
(22) Date of filing: 05.05.2000
(51) Int. Cl.: F21V 8/00

(54) **Lighting device, particularly for displaying indications and signaling emergencies**

(30) Priority: 13.05.1999 IT BO990062 U
(71) Applicant: G. BARGELLINI & C. S.p.A., I-40066 Pieve di Cento, Bologna (IT)
(72) Inventor: Bargellini Giulio, 40066 Pieve di Cento (Prov. of Bologna) (IT)
(74) Representative: Modiano, Guido, Dr.-Ing.

(57) **Abstract**

A lighting device, particularly for displaying and signaling emergencies, comprising a sheet (12) of transparent material which has, at least along one side, a seat (13) for a light source (14), the sheet (12) being suitable to diffuse light through its lateral faces (15).

## Description

The present invention relates to a lighting device, particularly for displaying indications and signaling emergencies.

Conventional display devices and devices for indicating emergency exits and for displaying indications with pictograms are currently commercially available in various types. These devices are constituted by commonly used lamps which are arranged outside sheet-like elements which bear pictograms on their lateral faces. Other devices are constituted by box-like elements made of transparent material inside which ordinary lamps are provided.

In particular, it has been observed that conventional display devices and devices used for indicating emergency exits and for displaying indications with pictograms are usually troublesome because of their excessive maintenance, such as the need to frequently replace the light source. All this causes a considerable financial cost in the management of these devices, since the intervention of specialized personnel to replace the light sources is frequently and periodically necessary.

Other problems of such devices are due to their dimensions and their aesthetic shape and are particularly felt in halls used for exhibitions, in museums and in enclosed spaces used for performances.

The aim of the present invention is to eliminate the above drawbacks, by providing a display, signaling and indication device which requires less maintenance than currently occurs and uses cheaper and more durable components.

Within the scope of this aim, an object of the present invention is to provide a device which, in addition to providing indications and signals, lights the path that the user must follow according to said indications.

This aim, this object and others which will become apparent hereinafter are achieved by a lighting device, particularly for displaying indications and signaling emergencies, characterized in that it comprises a sheet of transparent material which has, at least along one side, a seat for a light source, said sheet being suitable to diffuse light through its lateral faces.

Further characteristics and advantages of the present invention will become apparent from the following detailed description of a lighting device, particularly for displaying indications and signaling emergencies, illustrated only by way of non-limitative example in the accompanying drawings, wherein:
Figure 1 is an exploded perspective view of the device, according to the present invention;
Figure 2 is an exploded perspective view of the device according to a second embodiment of the present invention;
Figure 3 is a perspective view of the device according to the second embodiment;
Figure 4 is a lateral sectional view of the device according to the second embodiment;
Figure 5 is an exploded perspective view of the device according to a third embodiment of the device;
Figure 6 is an exploded perspective view of the device according to a fourth embodiment;
Figure 7 is a general perspective view of the fourth embodiment;
Figure 8 is a lateral sectional view of the fourth embodiment.

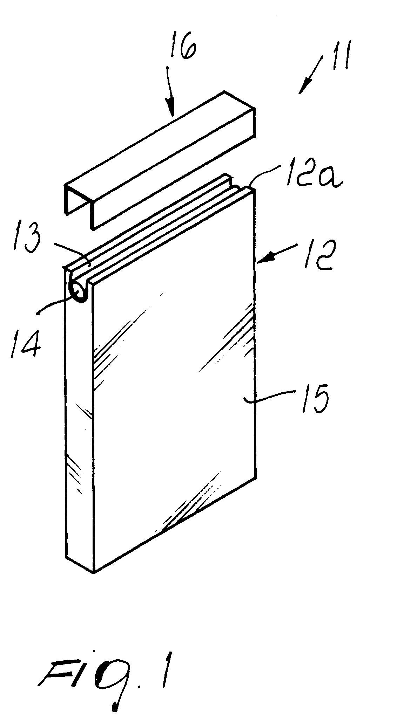

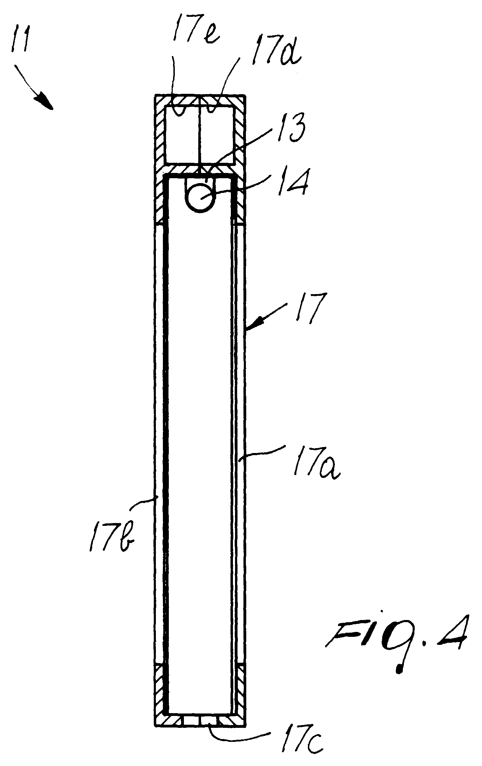

With reference to Figures 1-4, the reference numeral 11 generally designates a lighting device, particularly for displaying indications and signaling emergencies, according to the present invention. The device comprises a sheet 12 made of transparent material (for example a material known commercially as Plexiglas), which has, on a side 12a, a seat which is formed by a groove 13 which runs parallel to the side 12a and contains a light source, which is constituted by a cold-cathode fluorescent tube 14 suitable to emit light which diffuses through the transparent material of the sheet. The groove 13 is covered by a reflective element 16 which is adapted to prevent the light from scattering upward. Conveniently, the reflective element 16 is constituted by a U-shaped section which is applied so as to straddle the side 12a of the sheet 12. On its lateral faces 15, the sheet 12 bears signaling pictograms, for example direction-indicating arrows, symbols representing human figures, no-access and/or exit warnings.

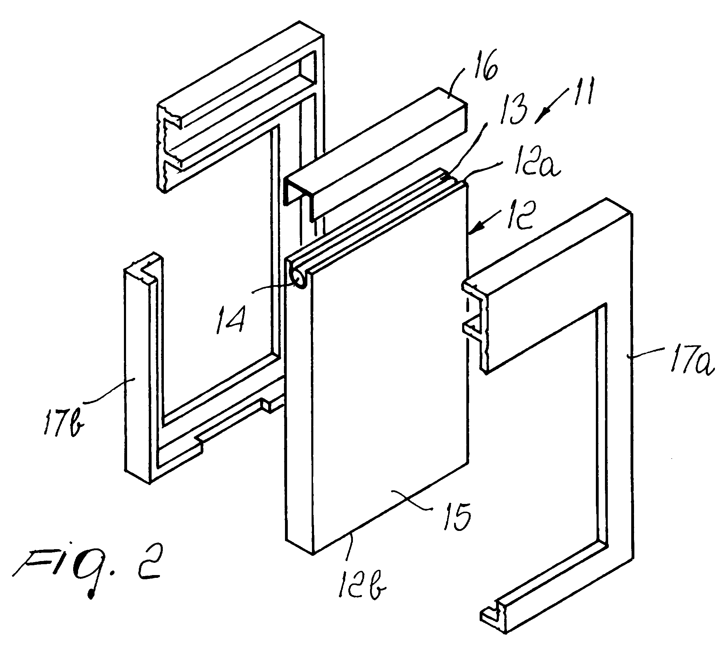

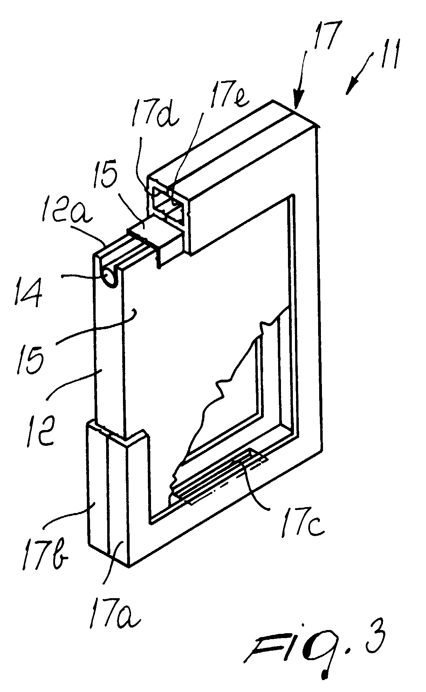

The device further comprises a substantially rectangular frame 17 (see Figures 2 and 3) constituted by elements 17a and 17b which enclose the assembly constituted by the sheet 12, the fluorescent tube 14 and the reflective element 16. The frame 17 forms in a downward region, and particularly at a side 12b that lies opposite the side 12a, a slot 17c which is suitable to diffuse light externally; in an upward region, the frame 17 comprises a substantially rectangular box-like body 17b which encloses a cavity 17e for accommodating electric power supply means of the fluorescent tube 14.

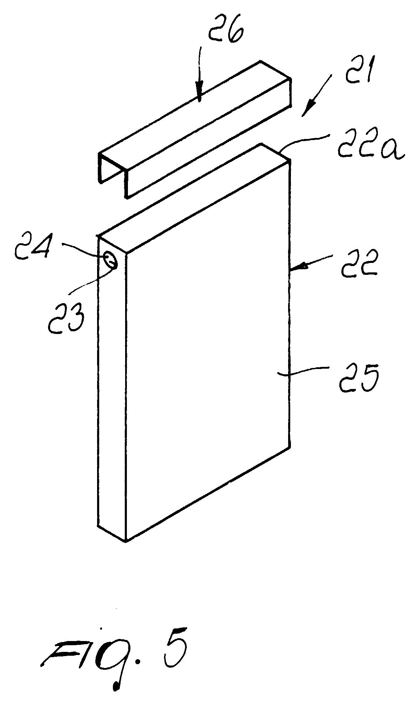

With reference to Figure 5, the reference numeral 21 generally designates the third embodiment of the lighting device according to the present invention. The device comprises a sheet 22 of transparent material (for example a material known commercially as Plexiglas) which has, proximate to a side 22a, a seat formed by a hole 23 which runs parallel to the side 22a and contains a light source constituted by a cold-cathode fluorescent tube 24 suitable to emit light which diffuses through said transparent material. The side 22a is covered by a reflective element 26 which is adapted to prevent the light from scattering upward. Conveniently, the reflective element 26 is constituted by a U-shaped section which is applied so as to straddle the side 22a of the sheet 22. On its lateral faces 25, the sheet bears signaling pictograms, for example direction-indicating arrows, symbols representing human figures, no-access and/or exit warnings.

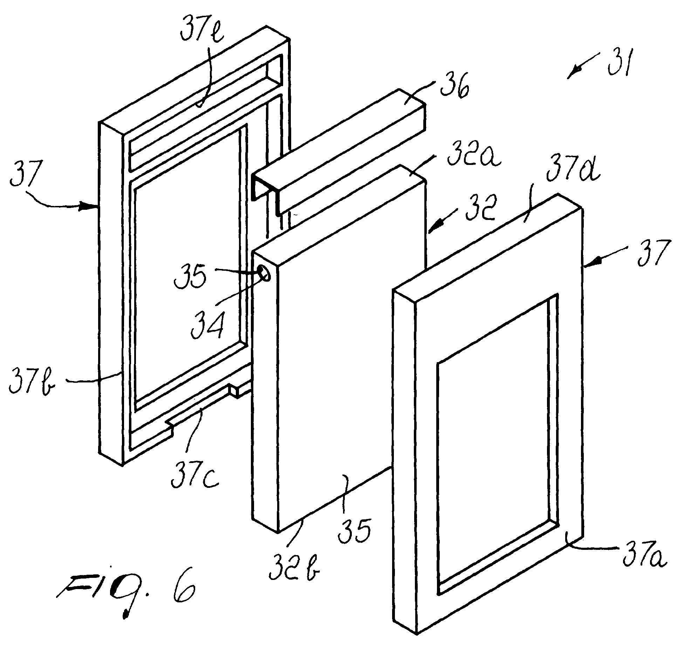

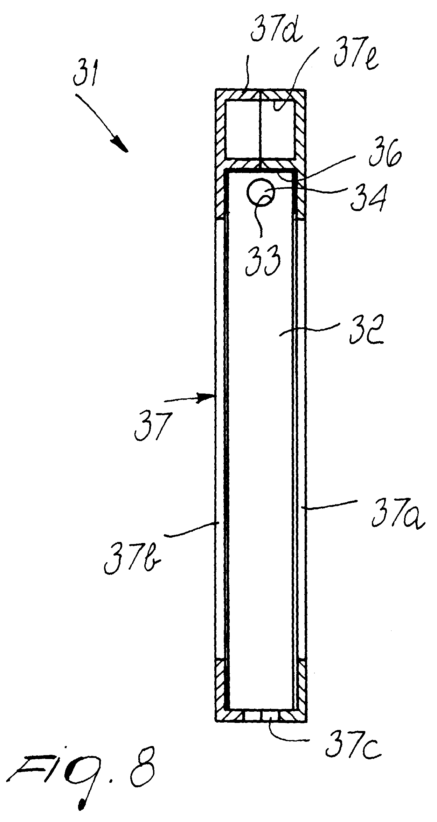

With reference to Figures 6 to 8, the reference numeral 31 generally designates a fourth embodiment of the lighting device according to the present invention. The device comprises a sheet 32 made of transparent material (for example a material known commercially as Plexiglas), which has, on a side 32a, a seat which forms a hole 33 which runs parallel to the side 32a and contains a light source, which is constituted by a cold-cathode fluorescent tube 34 suitable to emit light which diffuses through said transparent material. The hole 33 is covered by a reflective element 36 which is adapted to prevent the light from scattering upward. Conveniently, the reflective element 36 is constituted by a U-shaped section and is applied so as to straddle the side 32a of the sheet 32. On its lateral faces 35, the sheet 32 bears signaling pictograms, for example direction-indicating arrows, symbols representing human figures, no-access and/or exit warnings.

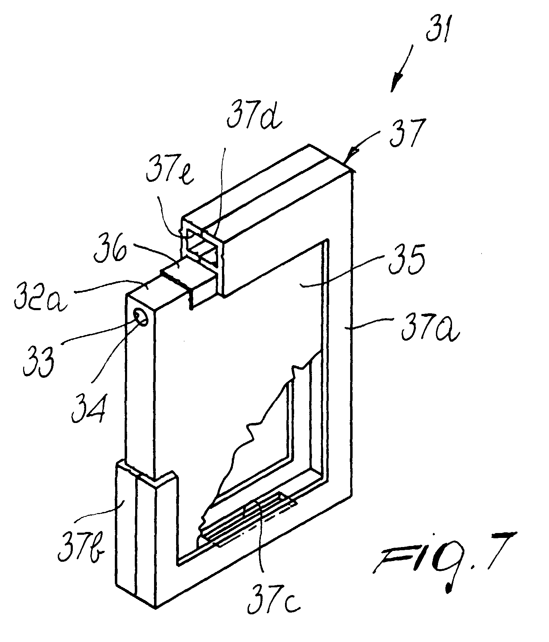

The device further comprises a substantially rectangular frame 37 (see Figures 6 and 7) which is constituted by elements 37a and 37b that enclose the assembly constituted by the sheet 32, the fluorescent tube 34 and the reflective element 36. The frame 37 forms in a downward region, particularly at a side 32b that lies opposite the side 32a, a slot 37c which is suitable to diffuse light externally; in an upward region, the frame 37 comprises a box-like body 37d which internally forms a substantially rectangular hollow body 37e for accommodating electric power supply means of the fluorescent tube 34.

With reference to the above-described embodiments, there is a further embodiment of each of them in which light reflection is achieved by means of the internal surface of the frame and particularly through the surface of the box-like body that rests, in a straddling arrangement, at the side where the light source is accommodated. Conveniently, said surface is constituted by reflective material.

In a further embodiment, with reference to the embodiments of Figures 1 and 5, reflection is achieved by means of a cladding and supporting framework.

Finally, provisions are made for a still further embodiment which does not have the slot for outward light diffusion.

In operation, the device not only provides signaling but also lights the exit paths through the slot formed in the embodiments provided with the frame.

The possibility to use a cold-cathode fluorescent lamp allows to have a luminance which is substantially constant over time and is higher than that of the light sources currently in use.

A prerogative of the present invention is the fact that it allows to use fluorescent tubes having a small diameter, thus solving the space occupation and aesthetic problems that arise in halls used for exhibitions and in enclosed spaces in general.

The above description shows that the present invention thus conceived achieves the intended aim and objects, and that the invention does not require excessive maintenance and therefore its running costs over time are reduced considerably with respect to conventional devices.

The invention thus conceived is susceptible of numerous modifications, all of which are within the scope of the inventive concept.

In the practical execution of the present invention, the materials employed, as well as the contingent shapes and dimensions, may be any according to requirements.

The disclosures in Italian Utility Model Application No. BO99U000062 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A lighting device, particularly for displaying and signaling emergencies, characterized in that it comprises a sheet of transparent material which has, at least along one side, a seat for a light source, said sheet being suitable to diffuse light through lateral faces of said sheet.

2. The lighting device according to claim 1, characterized in that said seat is constituted by a groove for containing said light source, said groove being substantially parallel to said side.

3. The lighting device according to claim 1, characterized in that said seat is constituted by a hole for containing said fluorescent tube, said hole being substantially parallel to said side.

4. The lighting device according to one of claims 1, 2 and 3, characterized in that it comprises a substantially rectangular frame which has a U-shaped cross-section and perimetrically encloses said sheet, said sheet having signaling and indication pictograms on said lateral faces.

5. The device according to one or more of the preceding claims, characterized in that the internal surface of said frame is reflective.

6. The lighting device according to one or more of the preceding claims, characterized in that it comprises a light-reflecting element above said at least one side.

7. The lighting device according to claim 4, characterized in that said frame has, on one side, a light diffusion slot.

8. The lighting device according to one or more of the preceding claims, characterized in that it comprises, in a box-like body formed by said frame and arranged above said seat, means for the supply of electric power to said light source.

9. The lighting device according to claim 1, characterized in that said sheet is substantially rectangular.
